# EUROPEAN PATENT APPLICATION

(11) **EP 4 675 908 A1**
(43) Date of publication of application: **07.01.2026**
(21) Application number: 24186220.0
(22) Date of filing: 03.07.2024
(51) Int. Cl.: H02P 6/08, B60J 7/057, G05B 1/00, H02P 6/28

(54) **CONTROL SYSTEM OF A MOTOR FOR A ROOF ASSEMBLY AND METHOD THEREFOR**

(71) Applicant: Inalfa Roof Systems Group B.V., 5807 GW Oostrum (NL)
(72) Inventor: MERKS, Martinus Hendrikus Maria, 6074 BK Melick (NL)
(74) Representative: De Vries & Metman

(57) **Abstract**

The invention relates to a control system for a motor operating a roof assembly, including a speed controller, a current controller, a motor and a performance feed forward module. The control system is configured for receiving a speed setpoint as input, feeding back a speed signal, and determining a speed error. Providing a current setpoint and feeding back a current output to the current setpoint, and providing a current error signal to the current controller. Feeding back a relative position signal and feeding forward, based on at least one performance profile determined from an absolute position signal, a current feed forward signal to the current setpoint. And generating, based on the current error signal and the relative position signal, a drive signal for driving a motor. The current error signal is based on the current setpoint, the current feedback and the current feed forward.

## Description

The present invention relates to control system of a motor for a roof assembly of a vehicle, and to a method for controlling a motor operating such a roof assembly. More in particular, the invention relates to Field Oriented Control FOC of a motor for a roof assembly. The roof assembly may be an open roof assembly with a movable panel or a roof assembly with a movable sun blind.

### BACKGROUND

A movable panel of an open roof assembly may be moved between an open position and a closed position by operating a motor. And similarly, the sun blind of a roof assembly may be moved between an open position and a closed position by operating a motor. The speed of the motor will determine the pace at which the movable member, i.e. the roof panel or the sun blind, is moved. In order to smoothly operate the movable panel, the speed is preferably controlled in a predefined manner. Thereto, a drive unit usually includes a speed controller which receives a set point as input for controlling the speed of the motor. In order to adapt the input and therewith the motor speed, the actual speed of the motor is fed back to the speed controller and compared with the setpoint. The actual speed may be obtained from direct measurement of speed or may be obtained indirectly from motor variables indicative of performance, such as e.g. current or voltage. Depending on the type of motor, indirect measurement may include further variables and/or parameters such as (angular) position estimation. In case of indirect measurement, it may be possible to provide motor control without sensors, commonly referred to as sensorless control.

However, a smooth predefined movement of the movable panel may be hampered under influence of temperature, humidity and other environmental factors, which for example determine viscosity of materials. Furthermore, aging of the roof assembly may further deteriorate operation of the movable panel over time.

Accordingly, there is a need for an improved manner of motor control.

### SUMMARY OF INVENTION

It is an object of the invention to provide a control system that alleviates the above-mentioned problems.

In one aspect, the invention relates to a control system for a motor operating a roof assembly, the control system comprising a speed controller, a current controller, a motor and a performance feed forward module. Wherein the control system is configured for receiving a speed setpoint as input, feeding back a speed signal from the motor to the input, and determining a speed error; providing, by the speed controller based on the speed error, a current setpoint. Further configured for feeding back a current output from the motor to the current setpoint, determining a current error signal, and providing the current error signal to the current controller. Feeding back a relative position signal to the current controller; feeding forward, by the performance feed forward module based on an absolute position signal, a current feed forward signal to the current setpoint. And generating, by the current controller based on the current error signal and the relative position signal, a drive signal for driving a motor. Wherein the determining of the current error signal is based on the current setpoint, the current feedback and the current feed forward.

The relative position signal may be indicative of the relative position of the rotor to the stator. The absolute position signal may be indicative of an absolute position of the motor and/or of a movable member on a track driven by the motor. The performance feed forward module may include at least one performance profile for a respective set of operating conditions. The performance feed forward module may be configured for storing and/or updating the at least one performance profile, in response to receiving position dependent performance feedback for the respective set of operating conditions. The performance feed forward module may further be configured for storing another performance profile, in response to detecting or receiving another set of operating conditions. And the performance feed forward module may store torque and/or current as function of absolute position.

In another aspect, the invention relates to a method for controlling a motor operating a roof assembly of a vehicle, the roof assembly comprising a roof panel movable between a closed position and an opened position via the motor, the method comprising: receiving a speed setpoint as input, feeding back from the motor a speed feedback signal to the input, and determining a speed error. The method further comprising: providing, based on the speed error, a current setpoint; feeding back a current output from the motor to the current setpoint, and determining a current error signal. Feeding back a relative position signal; feeding forward, based on a performance profile determined from an absolute position signal, a current feed forward signal to the current setpoint. And generating, based on the current error signal and the relative position signal, a drive signal for driving the motor. And wherein determining the current error signal is based on the current setpoint, the current feedback and the current feed forward.

The relative position signal may be indicative of the relative position of the rotor to the stator. The absolute position signal may be indicative of an absolute position of the motor and/or of a movable member on a track driven by the motor. The at least one performance profile may correspond to at least one respective set of operating conditions. The at least one performance profile may store torque and/or current as function of absolute position.

The method may further comprise updating the at least one performance profile, in response to receiving position dependent performance feedback for the respective set of operating conditions. The method may further comprise storing another performance profile, in response to detecting or receiving another set of operating conditions.

In a further aspect, the invention relates to a roof assembly for a vehicle, comprising a roof panel and/ or a sun blind movable between a closed position and an opened position. And a control system configured for operating the roof panel and/or sun blind to move between the closed and opened position. And further configured to perform the method as disclosed.

Particular embodiments of the invention are set forth in the dependent claims.

Further objects, aspects, effects and details of particular embodiments of the invention are described in the following detailed description of a number of exemplary embodiments, with reference to the drawings.

### BRIEF DESCRIPTION OF DRAWINGS

By way of example only, the embodiments of the present disclosure will be described with reference to the accompanying drawings, wherein:
FIG. 1A illustrates a perspective view of an example of a vehicle roof with an open roof assembly;
FIG. 1B illustrates an exploded view of the open roof assembly of Fig. 1A;
FIG. 2 illustrates schematically a stator-rotor configuration of a brushless motor;
FIG. 3 illustrates schematically an example of a control system of a brushless motor in accordance with the invention;
FIG. 4 illustrates schematically another example of a control system of a brushless motor in accordance with the invention;
FIG. 5 illustrates an embodiment of the control system of Fig. 4 in more detail; and
FIG. 6 illustrates a method for controlling a brushless motor in accordance with the invention.

### DETAILED DESCRIPTION

In the following description spatial references as, for example, front, side and rear, or underneath, below and above, or forward and rearward direction and driving movement, are made with regard to the general orientation of a vehicle, such as a passenger car. And in particular to a driver behind a steering wheel of such as vehicle. In the figures, a forward driving movement of a vehicle may e.g. be indicated by an arow D, pointing in a direction towards a front side of vehicle.

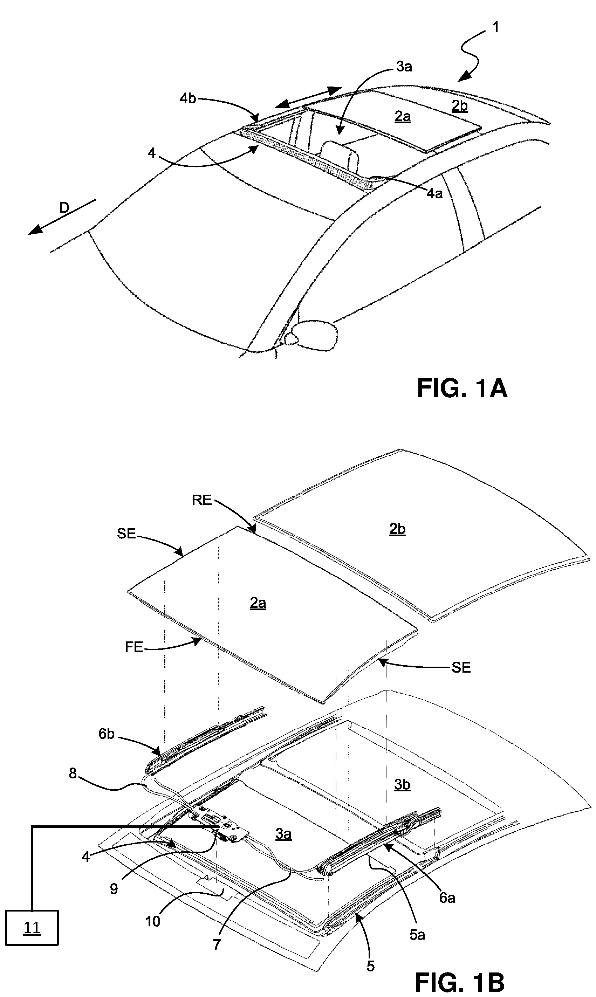

Figs. 1A and 1B illustrate a vehicle roof having an open roof assembly 1 arranged therein. The open roof assembly 1 comprises a movable panel 2a and a fixed panel 2b. The movable panel 2a is also referred to as a closure member, since the movable panel 2a is movable over a first roof opening 3a such to enable to open and to close the first roof opening 3a. A wind deflector 4 is arranged at a front side of the first roof opening 3a.

In the illustrated embodiment, the movable panel 2a may be in a closed position, which is a position wherein the movable panel 2a is arranged over and closes the first roof opening 3a and thus usually is arranged in a plane of the vehicle roof 1. Further, the movable panel 2a may be in a tilted position, which is a position wherein a rear end RE of the movable panel 2a is raised as compared to the closed position, while a front end FE of the movable panel 2a is still in the closed position. Further, the panel 2a may be in an open position, which is a position wherein the movable panel 2a is slid open and the first roof opening 3a is partly or completely exposed. In the open position, for example both the rear end RE and front end FE may be raised as compared to the closed position.

It is noted that the illustrated vehicle roof 1 corresponds to a passenger car. The present invention is however not limited to passenger cars. Any other kind of vehicles that may be provided with a movable panel are contemplated as well.

Fig. 1B illustrates the same vehicle roof as shown in Fig. 1A having panels 2a and 2b. In particular, while Fig. 1A shows the open roof assembly 1 in the open position, Fig. 1B is an exploded view of the open roof assembly 1 in a closed position. Further, in this exploded view of Fig. 1B, it is shown that there is a second roof opening 3b. The first and second roof openings 3a, 3b are provided in a frame 5 of the open roof assembly 1. An edge 5a of the frame 5 defines the first roof opening 3a.

The second roof opening 3b is arranged under the fixed panel 2b such that light may enter a vehicle interior space through the fixed panel 2b, presuming that the fixed panel 2b is a glass panel or a similarly transparent panel, for example made of a plastic material or any other suitable material. The second roof opening 3b with a transparent or translucent fixed panel 2b is optional and may be omitted in another embodiment of the open roof assembly 1.

The wind deflector 4 is commonly a flexible material, e.g. a woven or non-woven cloth having through holes arranged therein or a web or net. The flexible material is supported by a support structure 4a, e.g. a bar-like or tube-like structure, which structure is hingedly coupled, directly or indirectly, to the frame 5 at a hinge 4b.

The wind deflector 4 is arranged in front of the first roof opening 3a and adapts air flow when the movable panel 2a is in the open position. In its raised position, the wind deflector 4 reduces inconvenient noise due to air flow during driving. When the movable panel 2a is in the closed position or in the tilted position, the wind deflector 4 is held down below the front end FE of the movable panel 2a.

Usually, the wind deflector 4 is raised by a spring force when the movable panel 2a slides to the open position and the wind deflector 4 is pushed down by the movable panel 2a when the movable panel 2a slides back into its closed position. In Fig. 1A, the movable panel 2a is shown in an open position and the wind deflector 4 is shown in a raised position. In Fig. 1B, the movable panel 2a is shown in a closed position and the wind deflector 4 is correspondingly shown in a position in which it is held down.

Fig. 1B further illustrates a drive assembly having a first guide assembly 6a, a second guide assembly 6b, a first drive cable 7 and a second drive cable 8, and a drive motor 9. The first and second guide assemblies 6a, 6b are arranged on respective side ends SE of the movable panel 2a and may each comprise a guide and a mechanism. The guide is coupled to the frame 5, while the mechanism comprises movable parts and is slidably movable in the guide. The first and the second drive cables 7, 8 are provided between the mechanisms of the respective guide assemblies 6a, 6b and the drive motor 9.

The drive cables 7, 8 couple the drive motor 9 to the mechanisms of the respective guide assemblies 6a, 6b such that upon operating the drive motor 9, the mechanisms start to move. In particular, a core of the drive cable 7, 8 is moved by the drive motor 9 such to push or pull on the mechanisms of the respective guides 6a, 6b. Such a drive assembly is well known in the art and is therefore not further elucidated herein. Still, any other suitable drive assembly may be employed as well without departing from the scope of the present invention.

In the illustrated embodiment, the guide assemblies 6a, 6b may start movement with raising the rear end RE of the movable panel 2a, thereby bringing the movable panel 2a in the tilted position. Then, from the tilted position, the guide assemblies 6a, 6b may start to slide to bring the movable panel 2a in the open position. The present invention is however not limited to such embodiment. For example, in another embodiment, the movable panel 2a may be movable to a tilted position by raising the rear end RE, while an open position is reached by first lowering the rear end RE and then sliding the movable panel 2a under the fixed panel 2b or any other structure or element provided behind the rear end RE of the movable panel 2a. In further exemplary embodiments, the movable panel 2a may be merely movable between a closed position and a tilted position or between a closed position and an open position.

In the illustrated embodiment, the drive motor 9 is mounted at a recess 10 near or below the front end FE of the movable panel 2a in the closed position. In another embodiment, the drive motor 9 may be positioned at any other suitable position or location. For example, the drive motor 9 may be arranged near or below the rear end RE of the movable panel 2a in the closed position or below the fixed panel 2b.

A control unit 11 is schematically illustrated and is operatively coupled to the drive motor 9. The control unit 11 may be any kind of processing unit, either a software controlled processing unit or a dedicated processing unit, like an ASIC, as well known to those skilled in the art. The control unit 11 may be a stand-alone control unit or it may be operatively connected to an-other control unit, like a multipurpose, generic vehicle control unit. In yet another embodiment, the control unit 11 may be embedded in or be part of such a generic vehicle control unit. Essentially, the control unit 11 may be embodied by any control unit suitable for, capable of and configured for performing operation of the drive motor 9 and thus the movable roof assembly 1.

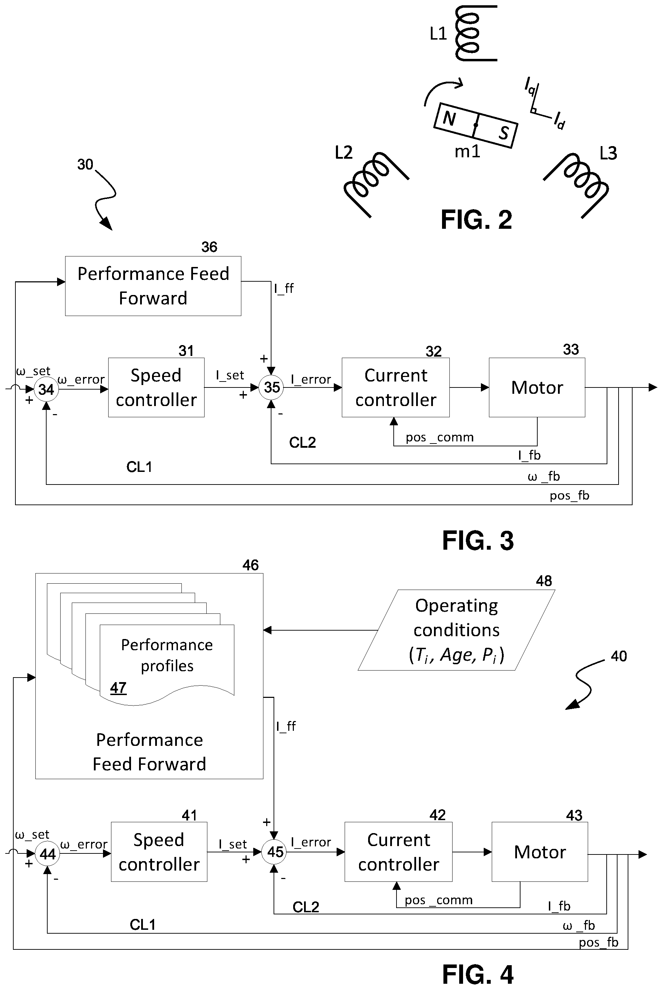

For operating the movable panel of the roof assembly electric motors are used. Brushless electric motors have been developed to avoid the brushes required in classic brushed electric motors. There are various type of brushless motors, differing in the manner in which the windings are applied, which in turn determines what driving signal is required: a trapezoidal direct current for BrushLess Direct Current BLDC or a sinusoidal alternating current for a Permanent Magnet Synchronous Motor. The benefit of either of these brushless motors is that there is no wear due to contact between the brushes and the commutator located on the axis of the rotor. These further operate more quietly and generate less heat. Accordingly, from the view of Noise, Vibration and Harshness these brushless electric motors are more desirable for operating a roof assembly. However, the control of such motors requires additional circuitry to change the magnetic fields of the stator elements, as it lacks the self-commutating characteristic of a brushed electric motor. Thereto, various ways of Field Oriented Control FOC have been developed to operate the coil elements making up the stator, see L1-L3 in Fig. 2. The rotor formed by the permanent magnet m1 with opposite poles N and S may be rotated about its axis under influence of the changing magnetic fields of the stator which is the net sum of the fields of the coil elements L1-L3. Torque experienced by the rotor is then produced by the attraction or repulsion between this summed net stator field of the coil elements and the magnetic field of the magnet i.e. rotor. The net magnetic field of the stator may be decomposed in a parallel or direct component I_{d} and orthogonal or quadrature I_{q} component, this in relation to the orientation of the rotor field. As only the quadrature component will contribute to the torque, the coils L1-L3 and their associated fields are controlled to maximize the quadrature and minimize the direct component. Hence, the term Field Oriented Control.

In order to operate the roof assembly smoothly, the torque is preferably constant to maintain a continuous movement and speed of the movable panel when opening or closing the roof assembly. As mentioned above however, the movement of a movable panel may be hampered, leading to additional load and requiring adaptation of torque to maintain a continuous speed and movement. Accordingly, it is desired to use the speed of the motor as feedback in a control system.

Referring to Fig. 3, an example of a control system for Field Oriented Control FOC is illustrated. The control system 30 includes a speed controller 31, a current controller 32 and a motor 33. A speed setpoint ω_set is received as input for the system 30. The output of the system may be expressed as a speed of the motor, a current drawn by the motor, and/or a relative position of the motor, such as e.g. an angular position of the rotor. An actual measured speed, or an estimate thereof, delivered as output of the system, is fed back via control loop CL1 to the input ω_set and used to determine 34 a deviation of the desired speed as a speed error ω_error. Based on this error or deviation signal ω_error the speed controller 31 may adjust the setpoint for the current I_set. The system output is further provided via a second control loop CL2 to the current setpoint I_set to determine 35 a current deviation or error signal I_error, which is provided to the current controller 32. In addition, the system output is provided as feedback directly to the current controller 32. Based on the signals received via the control loop CL2 and feedback, the current controller 32 applies Pulse Width Modulation PWM to drive the motor 33. For example, for a 10A control point a measured current of 9.8A, based on current and voltage from the phase signals delivered to each of the coil elements, gives an error of 0.2A which will drive an adjustment to achieve the desired 10A according to the setpoint.

In order to drive the motor properly regarding commutation, a relative position of the rotor to the stator needs to be provided to the controller to allow the electronics to adapt the driving signal. As will be understood, the relative positions are repeated per revolution of the motor. This relative position signal pos_comm coming from the motor 43 may be regarded as commutation signal for the current controller 43.

A standard Field Oriented Control FOC as described in relation to Fig.3, which may be sensorless, thus consists of a cascade control with two control loops CL1, CL2. The slow outer loop CL1 is controlling the motor speed based on an external setpoint, as e.g. a speed setting for the motor of 3500 rpm. The output of this control loop is a current setpoint that gets fed into the fast inner control loop CL2. This inner control loop is controlling the motor current and thus indirectly the output torque of the motor. As an example, if the motor speed is too low, the current setpoint will increase, this leads to an increased output torque of the motor that will then speed up the motor, under the presumption that the load torque remains constant. In practice, the load torque of a movable panel of a roof assembly is not a constant value and may vary during the opening movement. The standard FOC controller will act upon such load change because the speed of the motor will start to change. This means that whenever there is a significant load change, it may take some time before each of the controllers to act upon that change, and the speed is settled at the setpoint again. If the load change is sufficiently large, it may lead to fluctuations in the motor speed, deteriorating NVH performance. And, in some circumstances, even unstable controller behavior.

To improve the performance of the cascade systems as described thus far, a performance feed forward module 36 may be provided to enhance the response to an expected change in load torque, which e.g. may have been determined in advance. As the movement of a movable panel of a roof assembly over a set of parallel rail guides is limited to a fixed, known track, it may be determined in advance, for example from measurement, what the load torque along the track may be. For example, the curvature of a vehicle roof may raise or lower the load torque along the track. Instead, or in addition, the current drawn by the motor may be stored, as this may also be representative of the load. Accordingly, based on a performance profile of the track based on the position, whether measured or estimated, a feed forward signal may be provided as a current signal I_ff to the current controller. And for example, to further determine the current error signal I_error. The system output may be relied upon for delivering a position estimation signal pos_fb as input for the performance feed forward module 36, for example via a feedback loop. In other examples, the position may be delivered via a position detector or another type of sensor.

Referring to Fig. 4, another example of a control system 40 for Field Oriented Control FOC is illustrated. The control system 40 includes again the speed controller 41, the current controller 42, the motor 43, and the performance feed forward module 46. In this example, the performance feed forward module 46 includes multiple performance profiles. Each performance profile may correspond to different operating conditions or a different set of operating conditions. Operating conditions herein refer to circumstances influencing the load torque, such as for example temperature Tᵢ, humidity, age, pressure, power Pᵢ.

Moreover, the control system may be configured to collect and store data acquired over time and update one or more performance profiles, and/or it may create new, additional performance profiles. The data collected and/or acquired is referred to as performance feedback and may include the current drawn as function of the absolute position, the torque delivered as function of the absolute position, and corresponding environmental conditions as mentioned above. The data may further include the motor speed and/or acceleration. Apart from the more elaborate performance feed forward module the operation of the control system 40 is similar to that of Fig.3 as explained above.

A performance profile may be defined in various manners, in order to improve and/or adapt performance of the motor over time. The performance profile may include the amount of required torque at positions of the track along which the movable panel travels; and correlate this to a current feed forward I_ff stored for achieving the specified torque. In a basic manner, a performance profile may include merely a current offset that is stored for positions of the track along which the movable panel travels. The current offset forwarded then enables to adapt the current error signal I_error to obtain the speed as set by the speed controller. Furthermore, the performance may be different for the closing and opening movements of the movable member.

As mentioned above, the track of the movable panel, as defined by the guide or guide rails along which the mechanism slidably supports the panel, is known in advance and will not alter. This means that the track may be represented by a sequence of absolute positions, as indicated by the absolute position signal. This in turn allows to store the required and/or supplied current is stored as a function of the absolute positions or position signal, thereby creating a performance profile. Each performance profile may be stored for a particular set or combination of conditions, such vehicle operations or environmental conditions. Accordingly, environmental conditions and material properties of the roof assembly that determine the performance of the opening and closing of the roof assembly, may be monitored over time and stored as a respective performance profile for particular conditions. Even a potential difference in conditions in e.g. morning and afternoon may be monitored and, if these lead to differences in performance, may be stored for future use as performance profiles indicating position based feed forward signals. In this manner, a smooth operation of the roof assembly, and in particular a substantially constant speed, may be obtained.

The addition of new performance profiles may be determined by the occurrence of environmental conditions not previously detected. The updating of existing performance profiles, so for conditions similar to that as previously detected, may be determined by detection of an increase in deviation of the current error signal I_error during operation, or from the current as available from the controller. Preferably, this is done when the same deviations of a performance profile have occurred repeatedly, that is on multiple occasions. This in order to prevent being responsive to isolated, one-off occurrences.

During movement the performance profile feed forward controller will provide the current feed forward I_ff, in dependence of the absolute position signal, to the current setpoint I_set. When for a certain absolute position no data is available, the performance profile may determine the current feedforward by interpolating between adjacent available datapoints. This may further be performed as a function of environmental conditions, and even across performance profiles.

In order to fulfil the various functionalities as described herein, the performance profile feed forward module may need to be capable to monitor data, to collect and/or receive (additional) data, and/or to process data. Accordingly, the performance profile feed forward module36, 46 may be implemented as a basic storage register or look-up table, as a database, or as a processing module controller equipped with memory resources and able to perform various computing functions. This in dependence of the desired level of functionality.

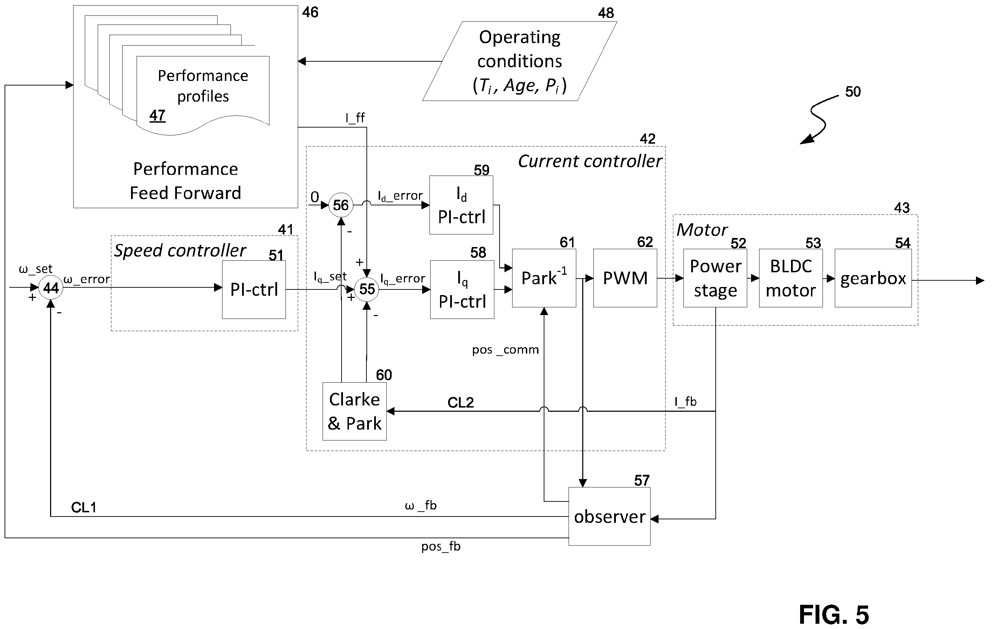

Referring to Fig. 5, an embodiment of the example control system of Fig. 4 is illustrated in more detail. In this embodiment, the speed controller 41 is embodied as Proportional Integral controller PI-ctrl 51. The motor 43 is embodied by a power stage 52 powering a Brushless Direct Current BLDC motor 53 that drives a gearbox 54. The current controller 42 is embodied by two Proportional-Integral Controllers 58, 59, one for each of the direct I_{d} and quadrature I_{q} components of the currents energizing the coil elements. To alleviate computation of the current components of each phase associated with the respective coils, Clarke and Park transformations 60, 61 are applied. These allow to represent the net electric field as direct I_{d} and quadrature I_{q} components. Other suited mathematical transformations may be applied if desired, or none at all when applying separate PI-controllers for the respective current of each of the three phases. Accordingly, the current feedback I_fb including current and voltage for each phase may be transformed. Both current components I_{d}, I_{q} are fed to the respective current setpoints 55, 56. As the torque experienced by the rotor depends solely on the quadrature component, it may be sufficient to focus control on this current component. The current feedback I_fb may be obtained from the power stage 52 of the motor 43, for example by measurement via sensors such as e.g. a shunt resistor. The current controller 42 further includes a Pulse Width Modulator PWM 62, for generating the input signals for the power stage 52 of the motor 43.

The performance feed forward module 46 is embodied such that it provides only a quadrature Iq component as current feed forward I_ff, which is delivered to the associated current setpoint 55.

The control system 50 further includes an observer 57. This observer 57 provides a mathematical model representing the relationships between I, V for each phase of the motor input signals and the motor speed and position as output signals. The observer 57 feeds the position of the movable member, i.e. a roof panel or a sun blind, operated by the motor to the performance feed forward module 46. The observer 57 further feeds the motor speed w_fb back to the speed setpoint w_set as part of the outer control loop CL1. The observer also provides the motor position to the current controller 42, that is the relative position of the rotor to the stator, to adapt the driving signal as explained. Whereas in brushed motors this is obviated by the self-commutation character thereof, in the brushless motor such feedback is required. Accordingly, this signal may be regarded as a motor position based commutation signal pos_comm. In other embodiments, the observer may further provide the motor speed ω to the current controller 42, to indicate the tact or frequency at which the motor operates and to indicate a frequency at which the switching of currents across the coil elements should occur.

In the above described embodiments, the speed and the position of motor may be derived from the currents and voltages of the respective phases that are supplied to the motor 43, and in particular the power stage 52. Thus enabling a sensorless operation of the control system. In other embodiments, the required feedback may be derived from Hall sensors, or it may be derived from encoders.

In order to determine the position of a movable member moved along a known track, an absolute position signal is required, which in turn may be derived from for example the motor speed and/or number of revolutions. Knowing the drivetrain characteristics, as e.g. the gearbox ratio, the position of movable member on the track may be determined from the absolute motor position signal pos_fb. In some embodiments, the observer may be configured for determining the absolute position of the movable member. In other embodiments, the performance feed forward module be configured for determining the absolute position of the movable member. As the absolute position of the movable member is directly related to the motor, it may also be sufficient to derive the absolute position signal directly from the motor and take it as representation of the absolute position of the movable member. Accordingly, the performance profile for a set of operating conditions may include the feedforward current as function of absolute position, the absolute position being that of the movable member or of the motor.

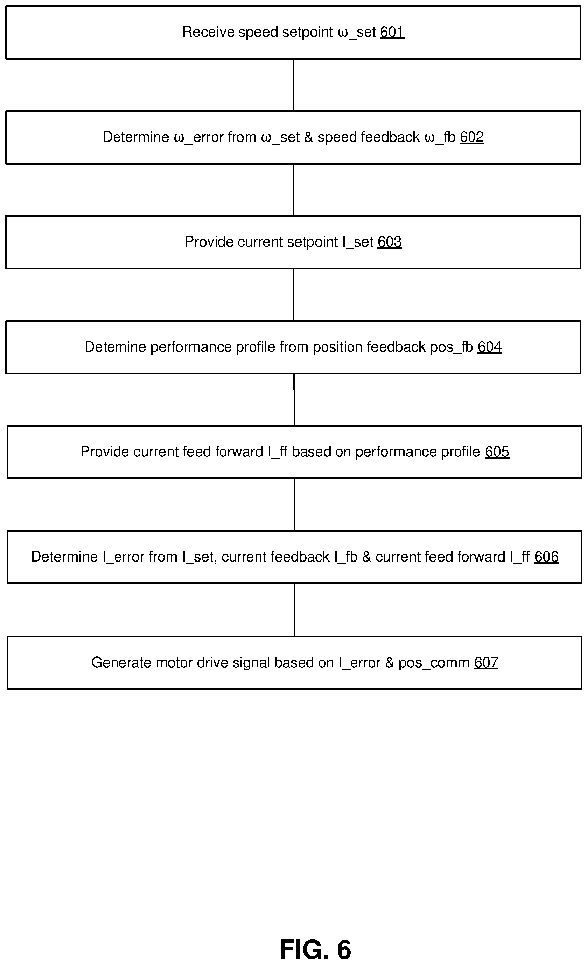

Referring to Fig. 6, an example of a method is illustrated for controlling a motor operating a roof assembly of a vehicle as disclosed in Fig. 1A and 1B. The roof assembly includes the roof panel 2a, 2b that is movable between a closed position and an opened position via the motor. The motor, being part of a drive assembly, will operate the movable panel. The method includes receiving 601 a speed setpoint w_set as input, feeding back from the motor (33, 43) a speed feedback signal ω_fb to the input w_set, and determining (602) a speed error ω_error. The speed setpoint will be a default setting as desired by a vehicle manufacturer. The speed feedback signal comes as measured from the motor or as derived from known operating currents and voltages of the motor. The speed error signal is the difference of the set speed and the speed feedback from the motor and is the input for the speed controller 41.

The method includes providing 603, based on the speed error ω_error, a current setpoint I_set. Feeding back a current output I_fb from the motor 33, 43 to the current setpoint I_set, and determining 606 a current error signal I_error. The current setpoint is indicative of a setting associated with a certain torque required to have the motor obtain the speed as set The current feedback is indicative of whether the required torque is delivered.

The method includes feeding back a relative position signal pos_comm. The relative position signal being indicative of a position of the rotor relative to the stator. And feeding forward 605, based on a performance profile determined 604 from an absolute position signal pos_fb, a current feed forward signal I_ff to the current setpoint I_set.

The method further includes generating 607, based on the current error signal I_error and the motor position signal pos_comm, a drive signal for driving the motor 33, 43.

In the above described method, the determining 606 of the current error signal I_error is based on the current setpoint I_set, the current feedback I_ff and the current feed forward I_ff.

The relative position signal pos_comm is indicative of the relative position of the rotor to the stator. This may be used by switching circuitry as a kind of commutation signal for driving the coil elements of the motor. The absolute position signal is indicative of an absolute position of the motor and/or of a movable member on a track driven by the motor, as explained above. The performance profile corresponds to at least one respective set of operating conditions. The performance profile stores torque and/or current as function of absolute position and is used to provide the current feed forward based on the absolute position of the motor or movable member.

In some embodiments, the method described in relation to Fig. 6, may be expanded to further include updating the performance profile in response to receiving position dependent performance feedback for the respective set of operating conditions.

In some embodiments, the method described in relation to Fig. 6, may be expanded to further include storing another performance profile in response to detecting or receiving another set of operating conditions.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure. In particular, features presented and described in separate de-pendent claims may be applied in combination and any advantageous combination of such claims are herewith disclosed.

Further, it is contemplated that structural elements may be generated by application of three-dimensional (3D) printing techniques. Therefore, any reference to a structural element is in-tended to encompass any computer executable instructions that in-struct a computer to generate such a structural element by three-dimensional printing techniques or similar computer-controlled manufacturing techniques. Furthermore, any such reference to a structural element is also intended to encompass a computer readable medium carrying such computer executable instructions.

Further, the terms and phrases used herein are not intended to be limiting, but rather to provide an understandable description of the invention. The terms "a" or "an", as used herein, are defined as one or more than one. The term plurality, as used here-in, is defined as two or more than two. The term another, as used herein, is defined as at least a second or more. The terms including and/or having, as used herein, are defined as comprising (i.e., open language). The term coupled, as used herein, is de-fined as connected, although not necessarily directly.

Although the present invention has been described above with reference to specific embodiments, it is not intended to be limited to the specific form set forth herein. Rather, the invention is limited only by the accompanying claims and other embodiments than the specific above are equally possible within the scope of these appended claims.

Furthermore, although exemplary embodiments have been described above in some exemplary combination of components and/or functions, it should be appreciated that, alternative embodiments may be provided by different combinations of members and/or functions without departing from the scope of the present disclosure. In addition, it is specifically contemplated that a particular feature described, either individually or as part of an embodiment, can be combined with other individually described features, or parts of other embodiments.

## Claims

1. Control system for a motor operating a roof assembly, comprising:
a speed controller (31, 41);
a current controller (32, 42);
a motor (33, 43); and
a performance feed forward module (36, 46);
wherein the control system is configured for:
receiving a speed setpoint w_set as input, feeding back a speed signal ω_fb from the motor (33, 43) to the input w_set, and determining a speed error ω_error;
providing, by the speed controller (31, 41), based on the speed error ω_error, a current setpoint I_set;
feeding back a current output I_fb from the motor (33, 43) to the current setpoint I_set, determining a current error signal I_error, and providing the current error signal I_error to the current controller (32, 42);
feeding back a relative position signal pos_comm to the current controller (32, 42);
feeding forward, by the performance feed forward module (36, 46), based on an absolute position signal pos_fb, a current feed forward signal I_ff to the current setpoint I_set;
generating, by the current controller (32, 42), based on the current error signal I_error and the relative position signal pos_comm, a drive signal for driving a motor (33, 43); and
wherein determining the current error signal I_error is based on the current setpoint I_set, the current feedback I_ff and the current feed forward I_ff.

2. System according to claim 1, wherein the relative position signal is indicative of the relative position of the rotor to the stator.

3. System according to claim 1 or 2, wherein the absolute position signal is indicative of an absolute position of the motor and/or of a movable member on a track driven by the motor.

4. System according to any of the preceding claims, wherein the performance feed forward module (36, 46) comprises at least one performance profile for a respective set of operating conditions.

5. System according to any of the preceding claims, wherein the performance feed forward module (36, 46) is configured for storing and/or updating the at least one performance profile, in response to receiving position dependent performance feedback for the respective set of operating conditions.

6. System according to any of the preceding claims, wherein the performance feed forward module (36, 46) is configured for storing another performance profile, in response to detecting or receiving another set of operating conditions.

7. System according to any of the preceding claims, wherein performance feed forward module (36, 46) stores torque and/or current as function of absolute position.

8. A method for controlling a motor operating a roof assembly of a vehicle, the roof assembly comprising a roof panel (2a, 2b) movable between a closed position and an opened position via the motor, the method comprising:
receiving (601) a speed setpoint w_set as input, feeding back from the motor a speed feedback signal ω_fb to the input w_set, and determining (602) a speed error ω_error;
providing (603), based on the speed error ω_error, a current setpoint I_set;
feeding back a current output I_fb from the motor to the current setpoint I_set, and determining (606) a current error signal I_error;
feeding back a relative position signal pos_comm;
feeding forward (605), based on at least one performance profile determined (604) from an absolute position signal pos_fb, a current feed forward signal I_ff to the current setpoint I_set;
generating (607), based on the current error signal I_error and the relative position signal pos_comm, a drive signal for driving the motor; and
wherein determining (606) the current error signal I_error is based on the current setpoint I_set, the current feedback I_ff and the current feed forward I_ff.

9. Method according to claim 8, wherein the relative position signal is indicative of the relative position of the rotor to the stator.

10. Method according to claim 8 or 9, wherein the absolute position signal is indicative of an absolute position of the motor and/or of a movable member on a track driven by the motor.

11. Method according to any of the preceding claims 8 - 10, wherein the at least one performance profile corresponds to at least one respective set of operating conditions.

12. Method according to any of the preceding claims 8 - 11, updating the at least one performance profile in response to receiving position dependent performance feedback for the respective set of operating conditions.

13. Method according to any of the preceding claims 8 - 12, storing another performance profile in response to detecting or receiving another set of operating conditions.

14. Method according to any of the preceding claims 8 - 13, wherein the at least one performance profile stores torque and/or current as function of absolute position.

15. Roof assembly for a vehicle, comprising:
a roof panel and/ or a sun blind (2a, 2b) movable between a closed position and an opened position; and
a control system according to any of the preceding claims configured for operating the roof panel and/or sun blind to move between the closed and opened position.
